# EUROPÄISCHE PATENTSCHRIFT

(11) **EP 2 545 116 B1**
(45) Veröffentlichungstag und Bekanntmachung des Hinweises auf die Patenterteilung: **16.07.2014**
(21) Anmeldenummer: 11702459.6
(22) Anmeldetag: 08.02.2011
(51) Int. Cl.: C08K 9/00

(54) **STABILISATORMISCHUNGEN FÜR HALOGENHALTIGE KUNSTSTOFFE DURCH UNTERWASSERGRANULIERUNG**
STABILIZER MIXTURES FOR HALOGEN-CONTAINING PLASTICS BY UNDERWATER PELLETIZATION
MÉLANGES STABILISANTS POUR PLASTIQUES CONTENANT DE L'HALOGÈNE PAR GRANULATION SOUS L'EAU

(30) Priorität: 11.03.2010 DE 102010011191
(43) Veröffentlichungstag der Anmeldung: 16.01.2013
(73) Patentinhaber: IKA Innovative Kunststoffaufbereitung GmbH&Co. KG, 06766 Wolfen (DE)
(72) Erfinder: REITH, Walter, 82281 Egenhofen (DE)
(74) Vertreter: Büchel, Edwin
(86) Internationale Anmeldenummer: PCT/EP2011/051827
(87) Internationale Veröffentlichungsnummer: WO 2011/110395

(56) Entgegenhaltungen:
- EP-A1- 0 330 889
- DE-A1- 10 051 739
- FR-A- 1 543 107
- GB-A- 1 405 626
- NL-A- 7 811 090
- US-A- 3 461 081

## Beschreibung

Die vorliegende Erfindung betrifft granulierte Stabilisatormischungen, Verfahren zu deren Herstellung sowie deren Verwendung.

Die Verwendung von Kunststoffen, insbesondere halogenhaltigen Kunststoffen, steigt stetig an. Insbesondere wird der Einsatz von halogenhaltigen Kunststoffen für Bau- und Werkstoffe immer größer.

Bekanntermaßen neigen halogenhaltige Kunststoffe bei thermischer Belastung während der Verarbeitung oder im Langzeitgebrauch zu unerwünschten Zersetzungs- und Abbaureaktionen. Dieses Problem kann durch den Einsatz von Stabilisatoren gelöst werden, die den halogenhaltigen Polymeren vor oder während der Verarbeitung zugegeben werden. Zu den bekannten Stabilisatoren zählen Barium-Cadmium-, Blei-, Organozinn- und Barium-Zink-Stabilisatoren.

Neben diesen schwermetallhaltigen und toxikologisch bedenklichen Metallstabilisatoren wurden in den letzten Jahren zunehmend ökologisch unbedenkliche Systeme erarbeitet, die auch bereits vermarktet wurden. Diese sind den festen Stabilisatoren zuzuordnen und werden aus Gründen der Umweltfreundlichkeit größtenteils in kompaktierter Form gehandelt. Diese Systeme sind Mehrkomponentenmischungen, deren Hauptbestandteil meistens der Substanzgruppe der Hydrotalcite (Magnesium-Aluminium-Hydroxycarbonat) zuzuordnen ist.

Schwermetallfreie Hydrotalcit- bzw. Hydrocalumit-Zusammensetzungen mit PVC-Thermostabilisatorfunktion werden beispielsweise in EP-B 1 046 668 und EP-B 0 930 332 beschrieben.

Diese Verbindungsklassen sind jedoch relativ teuer und nur in eingeschränktem Maße verwendbar, da die natürlich vorkommenden Formen entweder nicht in ausreichender Menge vorhanden oder durch schwermetallhaltige Gangarten, hauptsächlich Eisen- und Mangancarbonate, verunreinigt sind. Diese Verunreinigungen reduzieren die Stabilisatorwirkung in PVC drastisch.

Es muss deshalb auf synthetische Verfahren zurückgegriffen werden, die einen breiteren Zugang zu diesen Substanzklassen ermöglichen. Die Herstellung im industriellen Maßstab ist jedoch rohstoffbedingt kostenungünstig. Die Produktion ist ferner während der einzusetzenden Magnesium-, Kalzium- und Aluminiumsalze mit einem erheblichen Abwasserballast verbunden. Dieses Faktum kann bei einem großindustriellen Syntheseverfahren nicht außer Acht gelassen werden. Daher ist die Suche nach preisgünstigen Substanzen weiterhin erforderlich. Der Zugang zu ihnen sollte möglichst mit Ressourcenschonung und Umweltverträglichkeit verbunden sein.

In den letzten Jahren konnte dieses Ziel bereits teilweise erreicht werden, indem chemisch modifizierte Dolomite angeboten wurden, die durch Kalzinierung veredelt sind, da Dolomite als solche keine Stabilisatorfunktion aufweisen. Der Zugang zu diesen Verbindungen beruht auf halbsynthetischen Verfahren, da natürlich vorkommende Mineralien als Ausgangsbasis verwendet werden können. Diese Mineralien (Dolomite) stehen in gewaltigen Mengen und oft in genügender Reinheit zur Verfügung, so dass auf eine weitere mit Abwasserballasten verbundene Aufreinigung verzichtet werden kann. Die Produkt- und Performance-Qualitäten sind durch verschiedene Zusätze verbessert worden. Hierbei sei beispielsweise auf EP-A 0 422 335 und EP-A 0 945 483 verwiesen. Ein halbsynthetisches Produktionsverfahren ist in US-A 2006/0188428 veröffentlicht.

Stabilisatorenmischungen können sowohl in verschiedenen chemischen Zusammensetzungen wie auch in verschiedener Darreichungsform produziert werden. Üblicherweise werden die Stabilisatorenmischungen in Pulverform oder als Pressgranulate eingesetzt. Pulver haben jedoch den Nachteil, dass sie je nach Zusammensetzung zur Entmischung bei Transport und/oder Förderung neigen. Jegliches Handling im nicht völlig geschlossenen System führt zudem zu einer erheblichen Staubbelastung, die nicht nur gesundheits-, sondern auch umweltschädlich ist.

Pressgranulate sind hinsichtlich Entmischung unkritisch, durch Abrieb und Bruch entstehen jedoch auch hier erhebliche Mengen Staub. Zudem können durch Fehler beim Granulieren wie beispielsweise durch ungeeignete oder zu wenig Granulierhilfsmittel oder zu hohem Druck, sehr harte Granulate entstehen, die sich beim Mischen nicht vollständig auflösen und dann zu Fehlstellen im Endprodukt führen.

Eine weitere Produktform sind Pastillen (Tabletten), die deutlich staubärmer und abriebfester sind als Pressgranulate. Zur Herstellung von Tabletten wird üblicherweise die Stabilisatormischung in einem Kessel unter Rühren erhitzt und die Schmelze dann über eine geeignete Vorrichtung als Tropfen auf ein gekühltes Band abgesetzt. Zur Herstellung einer Schmelze sind Temperaturen von circa 130°C nötig, um die erforderliche Viskosität zu erreichen. Die relativ hohen Temperaturen schränken jedoch die Auswahl der Additive erheblich ein. Verschiedene Additive reagieren bei diesen Temperaturen miteinander. Die Zusammensetzung und damit die Wirksamkeit der Mischung verändert sich mit der Zeit. Für bestimmte anspruchsvolle Anwendungen, wie zum Beispiel Fenster oder Platten lassen sich die modernen Kalzium/Zink-Stabilisatoren daher üblicherweise nicht in dieser staubfreien, gut lager- und förderbaren Form herstellen. Am Markt befindliche Zweikomponentensysteme, bei denen ein Teil der Additive als Pastille, ein zweiter Teil mit der empfindlichen Komponente als Pulvermischung oder als Pressgranulat geliefert sind, sind nicht für alle Anwender praktikabel.

Das Verfahren der Granulierung wird allgemein üblicherweise in einem Granulator vorgenommen. Ein Granulator ist eine Werkzeugmaschine, mit der aus Strängen oder größeren Stücken durch Zerteilen Teilchen im Millimeter-Größenbereich hergestellt werden.

Bislang ist im Stand der Technik kein Verfahren beschrieben, staubarme Stabilisatormischungen in Granulatform herzustellen.

Die Aufgabe der vorliegenden Erfindung besteht darin, ein Verfahren bereitzustellen, das es ermöglicht, bei möglichst niedrigen Temperaturen granulierte Stabilisatormischungen für halogenhaltige Kunststoffe herzustellen, die eine gute Vermischbarkeit, eine geringe Bruch- und Abriebtendenz und eine geringe Staubbelastung aufweisen.

Die Aufgabe wird unter anderem gelöst durch ein Verfahren zur Herstellung einer granulierten Stabilisatormischung für halogenhaltige Kunststoffe, die Schritte enthaltend
(a) Erhitzen einer Mischung enthaltend
   (A) mindestens ein Gleitmittel,
   (B) mindestens einen stabilisatoraktiven Stoff,
   (C) Hilfs- und Zusatzstoffe,
      wobei mindestens 1 Ges.-% aller Stoffe bezogen auf die Gesamtmenge der Mischung einen Schmelzpunkt unter 100°C aufweist, bei 40 bis 100°C in einem Extruder oder Kneter,
(b) Pressen durch eine Lochplatte,
(c) Durchführen eines Heißabschlags unter Wasser,
(d) Abtransportieren der granulierten Stabilisatormischung in einem Wasserstrom
(e) Ausleiten der granulierten Stabilisatormischung aus dem Wasser, und
(f) Trocknen der granulierten Stabilisatormischung.

Ein Vorteil der vorliegenden Erfindung ist, dass nur ein Teil der Gesamtmenge an Gleitmittel (A), stabilisatoraktivem Stoff (B) und/oder Hilfs- und Zusatzstoffen (C) verflüssigt bzw. in geringviskoser Form eingesetzt werden kann und kein Verpressen der beispielsweise hochschmelzenden Stoffe erfolgt. Dies bewirkt eine gute Auflösung der Granulate im Mischer. Ferner erfolgt eine Umhüllung der hochschmelzenden Stoffe durch niedrigschmelzende Stoffe.

Ein weiterer Vorteil des erfindungsgemäßen Verfahrens ist die konstante Qualität und Zusammensetzung der granulierten Stabilisatormischung für halogenhaltige Kunststoffe.

Im Rahmen der vorliegenden Erfindung ist unter dem Begriff "Schmelzpunkt" der Unterwert eines Schmelzbereiches zu verstehen, sofern für einen Stoff ein solcher vorliegt.

In einer bevorzugten Ausführungsform des erfindungsgemäßen Verfahrens weisen mindestens 10 Gew.-% aller Stoffe der Mischung einen Schmelzpunkt unter 100 °C auf. Besonders bevorzugt weisen mindestens 13' Gew.-% aller Stoffe der Mischung einen Schmelzpunkt unter 100 °C auf.

Weiter bevorzugt weisen höchstens 75 Gew.-% aller Stoffe der Mischung, weiter bevorzugt höchstens 50 Gew.-% und weiter bevorzugt höchstens 40 Gew.-% einen Schmelzpunkt von höchstens 100 °C auf.

Das mindestens eine Gleitmittel (A) kann ausgewählt sein aus der Gruppe der Wachse und Ester.

In einer besonders bevorzugten Ausführungsform der vorliegenden Erfindung handelt es sich bei Komponente (A) um Verbindungen, die ausgewählt sind aus der Gruppe bestehend aus Montanwachsen, aromatischen oder aliphatischen Estern, Fettsäurestern, Amidwachsen, Polyethylenwachsen, Chlorparaffinen, Glyzerinestern oder Erdalkaliseifen, modifizierten Polyethylenwachsen, synthetischen Hartwachsen, Fettketonen und Kombinationen davon wie beispielsweise in EP-A 0259783 aufgeführt.

Weiterhin können als Stoff (A) oxidierte PE-Wachse und/oder Fischer-Tropsch-Paraffine sowie grobkristalline Paraffinwachse eingesetzt werden.

Wachse sind allgemein Stoffe, die heute durch ihre mechanisch-physikalischen Eigenschaften definiert werden. Ihre chemische Zusammensetzung und Herkunft können hingegen sehr unterschiedlich sein. Ein Stoff wird im Rahmen der vorliegenden Erfindung vorzugsweise dann als Wachs bezeichnet, wenn er bei 20°C knetbar, fest bis brüchig hart ist, eine grobe bis feinkristalline Struktur aufweist, farblich durchscheinend bis opak, aber nicht glasartig ist, über 40°C ohne Zersetzung schmilzt, wenig oberhalb des Schmelzpunkts leicht flüssig (wenig viskos) ist, eine stark temperaturabhängige Konsistenz und Löslichkeit aufweist sowie unter leichtem Druck polierbar ist, oder zumindest höchstens eine dieser Eigenschaften nicht erfüllt ist (s.a. Definition der Deutschen Gesellschaft für Fettwissenschaft (DGF-Einheitsmethode M-I 1 (75)). Bei den Wachsarten unterscheidet man zwischen tierischen und pflanzlichen Wachsen einerseits, Erdwachsen und synthetischen Wachsen andererseits. Aus chemischer Sicht sind Hauptkomponenten dieser Stoffgemische Ester von Fettsäuren mit langkettigen, aliphatischen, primären Alkoholen, den so genannten Wachsalkoholen. Diese Ester unterscheiden sich in ihrem Aufbau von den Fetten und Ölen, die Triglyceride mit Fettsäuren sind.

Tierische Wachse sind beispielweise Walrat und Bienenwachs. Pflanzliche Wachse sind beispielsweise Zuckerrohrwachs oder Garnaubawachs der Carnaubapalme. Das Jojobaöl besteht nicht aus Triglyceriden und ist damit kein fettendes Öl, sondern chemisch betrachtet ein flüssiges Wachs. Wachsschichten auf Blättern und Früchten haben die Aufgabe, Pflanzen vor Wasserverlusten zu schützen.

Geologische Erdwachse (Ozokerit und das daraus hergestellte Ceresin) bestehen im Wesentlichen aus Kohlenwasserstoffen. Synethetische Wachse werden hauptsächlich aus Erdöl gewonnen. Hauptprodukt ist Hartparaffin, das zum Beispiel für Kerzen und Schuhcreme verwendet wird. Für spezielle Anwendungen werden natürliche Wachse chemisch modifiziert oder vollständig synthetisiert (Polyethylene, Copolymere). Auch aus Soja kann durch Hydrierung Sojawachs hergestellt werden.

In dem erfindungsgemäßen Verfahren ist der mindestens eine stabilisatoraktive Stoff (B) ausgewählt aus der Gruppe bestehend aus einem Innerkomplex ausgewählt aus der Gruppe bestehend aus Koordinationspolymeren, Metallinnerkomplexen, schwermetallhaltigen Stabilisatoren, Ca/Zn-Stabilisatoren auf Basis von Hydrotalcit, Zeolithe und Dawsonite, Hydrocalumite, Stearoylbenzoylmethan und sterisch gehinderte Amine (HALS), heterocyclische Aminoalkohole und Antioxidatien, Anorganische und Organische Basen, Epoxide und Glyzidylverbindungen, β-Diketone und β-Ketoester, Polyole und Zuckeralkohole und Phosphorigsäureester.

### Sterisch gehinderte Amine (HALS) und Heterozyklische Aminoalkohole

Bei den sterisch gehinderten Aminen handelt es sich allgemein um Verbindungen enthaltend die Gruppe 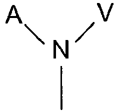 worin A und V unabhängig voneinander C₁-₈-Alkyl-, C₃-₈ Alkenyl-, C₅-₈ -Zykloalkyl-, oder C₇-₉ -Phenylalkyl- sind, oder zusammen gegebenenfalls durch O, NH oder CH₃-N unterbrochenes C₂-₅ -Alkylen bilden, oder um ein zyklisches sterisch gehindertes Amin, insbesondere eine Verbindung aus der Reihe der Alkyl- bzw. Polyalkylpiperidine, vor allem der Tetramethylpiperidine enthaltend die Gruppe

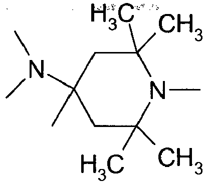

Beispiele für solche, Polyalkylpiperidinverbindungen sind folgende (bei den oligomeren oder polymeren Verbindungen liegen n und r im Bereich 2-200, vorzugsweise im Bereich 2-10, insbesondere 3-7). Eine umfangreiche Liste solcher Verbindungen befindet sich in EP 0 796 888 B1.

Im Rahmen einer besonders bevorzugten Ausführungsform der vorliegenden Erfindung werden als Aminoalkohole heterozyklische Verbindungen eingesetzt. Beispiele für diese sind: EO-, PO- und BO-Umsetzungsprodukte von Ethylen- und Propylenharnstoffen, Parabansäure, Hydantoinen, Barbitursäuren, Glykolurilen und Isozyanursäuren.

Besonders bevorzugt ist im Rahmen der vorliegenden Erfindung der Einsatz von Tris(hydroxyethyl)isocyanurat (THEIC) oder Tris(hydroxypropyl)isocyanurat.

Die Hydrotalzite können Al/Mg/Karbonat-, Al/Mg/Ti/Karbonat-, Li/Mg/Karbonat- oder Li/Al/Mg/Karbonat basiert sein, Verbindungen aus der Reihe der Hydrotalzite können durch die folgende allgemeine Formel:

M²⁺₁₋ₓM³⁺ₓ(OH)₂(Aⁿ)_{x/b}*d H₂O

beschrieben werden, wobei
M²⁺ = Kation eines oder mehrerer Metalle der Gruppe Mg, Ca, Sr,
Zn oder Sn ist, M³⁺ = ein Al- oder B- Kation ist, Aⁿ ein Anion mit der Valenz n darstellt,
b = n eine Zahl von 1-2 ist, 0 < x < 0,5 ist, d eine Zahl von 0-20 ist. Bevorzugt sind Verbindungen mit Aⁿ = OH⁻, ClO₄⁻, HCO₃⁻, CH₃COO⁻, C₆H₅COO⁻, CO₃²⁻, (CHOHCOO)₂²⁻, (CH₂COO)₂²⁻, CH₃CHOHCOO⁻, HPO₃⁻ oder HPO₄²⁻.

### Beispiele für Hydrotalzite sind

Al₂O₃ * 6MgO * CO * 12 H₂O, Mg_{4,5}Al₂(OH)₁₃ * CO₃ * 3,5 H₂O, 4MgO* Al₂O₃ * CO₂ * 9 H₂O, 4MgO * Al₂O₃ * CO₂ * 6 H₂O, ZnO * 3MgO * Al₂O₃ * CO₂ * 8-9 H₂O und ZnO * 3MgO * Al₂O₃ * CO₂ * 5-6 H₂O

Ganz besonders bevorzugt werden entwässerte Hydrotalzite eingesetzt.

Zeolithe können durch die Formel M_{x/n}[(AlO₂)ₓ(SiO₂)_{y}] * w H₂O beschrieben werden, worin n die Ladung des Kations M; M ein Element der ersten oder zweiten Hauptgruppe, wie Li, Na, K oder NH₄ sowie Mg, Ca, Sr oder Ba; y:x eine Zahl von 0,8 bis 15, bevorzugt von 0,8 bis 1,2; und w eine Zahl von 0 bis 300, bevorzugt von 0,5 bis 30, ist.

### Beispiele für Zeolithe sind Natriumalumosilikate der Formeln

Na₁₂Al₁₂Si₁₂O₄₈ * 27 H₂O [Zeolith A], Na₆Al₆Si₆O₂₄ * 2 NaX * 7,5 H₂O, X=OH, Halogen, ClO₄ [Sodalith]; Na₆Al₆Si₃₀O₇₂ * 24 H₂O; Na₈Al₈Si₄₀O₉₆ * 24 H₂O; Na₁₆Al₁₆Si₂₄O₈₀ * 16 H₂O; Na₁₆Al₁₆Si₃₂O₉₆ * 16 H₂O; Na₅₆Al₅₆Si₁₃₆O₃₈₄ * 250 H₂O [Zeolith Y], Na₈₆Al₈₆Si₁₀₆O₃₈₄ * 264 H₂O [Zeolith X]; Na₂O, Al₂O₃, (2-5)SiO₂, (3,5-10)H₂O [Zeolith P]; Na₂O, Al₂O₃, 2SiO₂, * (3,5-10) H₂O (Zeolith MAP); oder die durch teilweisen bzw. vollständigen Austausch der Na-Atome durch Li-, K-, Mg-, Ca-, Sr- oder Zn-Atome darstellbaren Zeolithe wie (Na,K)₁₀Al₁₀Si₂₂O₆₄ * 20 H₂O; Ca_{4,5}Na₃[(AlO₂)₁₂(SiO₂)₁₂] * 30 H₂O; K₉Na₃[(AlO₂)₁₂(SiO₂)₁₂] * 27 H₂O. Ganz besonders bevorzugt sind Na-Zeolith A und Na-Zeolith MAP (siehe auch PS - US 6,531,533). Ebenso bevorzugt sind Zeolithe mit äußerst geringer Teilchengröße, insbesondere vom Na-A- und Na-P-Typ, wie sie auch in PS - US 6.096.820 beschrieben sind.

### Dawsonite werden durch die allgemeine Formel

### M[Al(OH)₂CO₃] (M = Na, K)

beschrieben. Die Herstellung von Na-Dawsonit (DASC bzw. SAC) und K-Dawsonite (DAPC) ist publiziert in PS - US 3.501.264 und US 4.221.771 sowie in PS - EP 0394.670 Al. Die Synthese kann hydrothermal oder nichthydrothermal erfolgen. Die Produkte können kristallin oder amorph vorliegen. Einbezogen in die Substanzklasse sind auch Natrium-Magnesium-Alumokarbonate (SMAC); deren Herstellung in PS - US 455.055.284 beschrieben ist.

### Antioxidantien

Dazu zählen sterisch gehinderte Phenole, wie alkylierte Monophenole, z. B. 2,6-Di-tert-butyl-4-methylphenol, Alkylthiomethylphenole, z.B. 2,4-Di-oktylthiomethyl-6-tert-butylphenol, alkylierte Hydrochinone, z. B. 2,6-Di-tert-butyl-4-methoxyphenol, hydroxylierte Thiodiphenylether, z. B. 2,2'-Thio-bis-(6-tert-butyl-4-methylphenol), Alkyliden-Bisphenole, z.B. 2,2'-Methylen-bis-(6-tert-butyl-4-methylphenol), Benzylverbindungen, z.B. 3,5,3',5'-Tetra-tert-butyl-4,4'-di-hydroxydibenzylether, hydroxybenzylierte Malonate, z.B. Dioktadezyl-2,2-bis-(3,5-di-tert-butyl-2-hydroxybenzyl)-malonat, Hydroxybenzyl-Aromaten, z.B. 1,3,5-Tris-(3,5-di-tert-butyl-4-hydroxybenzyl)-2,4,6-trimethylbenzol, Triazinverbindungen, z.B. 2,4-Bis-oktyl-merkapto-6-(3,5-di-tert-butyl-4-hydroxyanilino)1,3,5-triazin, Phosphonate und Phosphonite, z.B. Dimethyl-2,5-di-tert-butyl-4-hydroxybenzylphosphonat, Azylaminophenole, z.B. 4-Hydroxylaurinsäureanilid, Ester der beta-(3,5-Di-tert-butyl-4-hydroxyphenyl)-propionsäure, der beta-(5-tert-Butyl-4-hydroxy-3-methylphenyl)-propionsäure, der beta-(3,5-Dizyklohexyl-4-hydroxyphenyl)-propionsäure, Ester der 3,5-Di-tert-butyl-4-hydroxy-phenylessigsäure mit ein- oder mehrwertigen Alkoholen, Amide der β-(3,5-di-tert-butyl-4-hydroxyphenyl)-propionsäure, z.B. N,N'-Bis-(3,5-di-tert-butyl-4-hydroxyphenylpropionyl)-hexamethylendiamin, Vitamin E (Tocopherol) und Abkömmlinge sowie D,L-Ascorbinsäure.

Darüber hinaus kann auch IRGANOX 1046^{®} als Antioxidanz verwendet werden.

Die Antioxidantien können in einer Menge von beispielsweise 0,01 bis 10 Gew.-Teilen, zweckmäßig 0,1 bis 10 Gew.-Teilen und insbesondere 0,1 bis 5 Gew.-Teilen, bezogen auf 100 Gew.-Teile PVC, angewendet werden.

Eine Komponente des mindestens einen stabilisatoraktiven Stoffs (B) kann beispielsweise ein Blei- oder Organozinn-Stabilisator sein. Bevorzugt ist es ein Bleistabilisator. Darüber hinaus können auch weitere metallhaltige Stabilisatoren in der einen Komponente des stabilisatoraktiven Stoffs (B) sein.
Kalzium-Zink-Stabilisatoren auf Basis von Hydrotalcit oder Barium-Zink-Stabilisatoren sind besonders bevorzugt. Vorzugsweise enthalten diese entsprechende Metallcarboxylate, insbesondere fettsaure Metallcarboxylate.

In einer weiteren bevorzugten Ausführungsform der vorliegenden Erfindung ist der mindestens eine stabilisatoraktive Stoff (B) eine Verbindung ausgewählt aus Hydrotalcit, Zinkstearat, Calciumacetylacetonat, Tris-hydroxy-ethyl-isocyanuart, Stearoylbenzoylmethan (Handelsname z. B. Rhodiastab P 55) und mindestens ein Antioxidants.

Ferner können auch bleihaltige Stabilisatoren für die vorliegende Erfindung verwendet werden. Als bleihaltige Stabilisatoren für den mindestens einen stabilisatoraktiven Stoff (B) (Bleistabilisatoren) eignen sich im Rahmen der vorliegenden Erfindung grundsätzlich alle organischen oder anorganischen Bleiverbindungen. Besonders geeignet sind beispielsweise basische Bleisalze von anorganischen Säuren wie dreibasisches Bleisulfat, vierbasisches Bleisulfat, zweibasisches Bleiphosphit oder zweibasisches Bleiphosphitsulfit oder Bleikarbonat (Bleiweiss), Bleisalze von linearen oder verzweigten, gesättigten oder ungesättigten, aliphatischen oder araliphatischen oder aromatischen organischen Monokarbonsäuren, wie Essigsäure, Propionsäure, Buttersäure, Valeriansäure, Hexansäure, Önanthsäure, Oktansaüre, Neodekansäure, 2-Ethylhexansäure, Pelargonsäure, Dekansäure, Undekansäure, Dodekansäure (Laurinsäure), Tridekansäure, Myristinsäure, Palmitinsäure, 3,6-Dioxaheptansäure, 3,6,9-Trioxadekansäure, Behensäure, Benzoesäure, p-tert-Isostearinsäure, Stearinsäure, 12-Hydroxystearinsäure, 9,10-Dihydroxystearinsäure, Ölsäure, Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, n-Propylbenzoesäure, Salizylsäure, p-tert-Oktylsalizylsäure, Sorbinsäure, Zimtsäure, Acrylsäure, Methacrylsäure, Harzsäure (Abietinsäure); Dikarbonsäuren bzw. deren Monoester oder Hydroxykarbonsäuren, wie Oxalsäure, Malonsäure, Maleinsäure, Fumarsäure, Weinsäure, Mandelsäure, Äpfelsäure, Glykolsäure, Polyglykoldikarbonsäuren mit einem Polymerisationsgrad von etwa 10 bis etwa 12, Phthalsäure, Isophthalsäure, Terephthalsäure oder Hydroxyphthalsäure; Tri- oder Tetrakarbonsäuren bzw. deren Mono-, Di- oder Triester wie Hemimellithsäure, Trimellithsäure, Pyromellithsäure oder Zitronensäure, oder dimerisierte bzw. trimerisierte Linolsäure. Ebenfalls geeignet sind zykloaliphatische Karbonsäuren wie Zyklohexankarbonsäure, Tetrahydrophthalsäure, 4-Methyltetrahydrophthalsäure, Hexahydrophthalsäure, Endomethylentetrahydrophthalsäure oder 4-Methylhexahydrophthalsäure. Besonders geeignet sind dabei neutrales oder basisches Bleistearat, Bleiweiß, 3- oder 4-basisches Bleisulfat, 2-basisches Bleiphosphit, 2-basisches Bleiphthalat oder 4-basisches Bleifumarat. Ganz besonders bevorzugt sind 2-basisches Bleiphosphit und 3-basisches Bleisulfat.

Ebenfalls als Bleiverbindungen für den stabilisatoraktiven Stoff (B) geeignet sind Produkte, wie sie durch Umsetzung von Bleioxid mit Hydroxykarbonsäuren beispielsweise Dimethylolpropionsäure erhältlich sind. Derartige Verbindungen und ihre Herstellung werden in EP 0 313 113 beschrieben.

Bevorzugt sind auch Bleiphosphit oder -sulfat oder ihre Mischungen mit mindestens einer organischen Bleiverbindung, insbesondere mit einem Bleikarboxylat, bevorzugt Bleistearat oder Bleioleat. Ganz besonders bevorzugt sind 2-basisches Bleiphosphit und 3-basisches Bleisulfat und deren Abmischungen mit Blei- oder Kalziumstearat bzw. deren Kombination mit Kalzium-Zink-Fettsäurekarboxylaten.

Der Gehalt eines erfindungsgemäßen Stabilisatorsystems an Bleistabilisatoren, beträgt mindestens 5 Gew.-%, bevorzugt 10 bis 95 Gew.-%, besonders bevorzugt 20 bis 90 Gew.-%, und ganz besonders bevorzugt 30 bis 75 Gew.-%. Bei basischen Bleistabilisatoren variiert der Basenanteil bevorzugt von 1:1 bis 10:1.

Als Kalzium-Zink- bzw. Barium-Zink-Stabilisatoren eignen sich im Rahmen der vorliegenden Erfindung als stabilisatoraktiver Stoff (B) anorganische Kalzium-, Barium- und Zinkverbindungen sowie grundsätzlich alle Kalzium-, Barium- und Zinkkarboxylate sowie die Phenolate dieser Metalle. Besonders geeignet sind beispielsweise Zinkoxid, Kalzium-, Barium- oder Zinkhydroxid bzw. -sulfat, Zink- oder Bariumcarbonat, Bariumnonylphenolat, Zinksulfid, Barium- oder Zinkoxid- bzw. -hydroxid - Additionsverbindungen, wie überbasische Kalzium-, Barium- oder Zinkkarbonate bzw.-karboxylate. Die Karboxylate leiten sich von Karbonsäuren ab, wie sie oben für Bleistabilisatoren beispielhaft beschrieben sind.

Darüber hinaus können weitere metallhaltige Stabilisatoren im erfindungsgemäßen Stabilisatorsystem enthalten sein.

Vorzugsweise handelt es sich hierbei um mindestens einen Kalzium-Zink- oder Barium-Zink-Stabilisator, wobei diese vorzugsweise die entsprechenden Metallkarboxylate enthalten.

Neben den genannten Metallstabilisatoren kann der mindestens eine stabilisatoraktive Stoff (B) mindestens einen Innerkomplex ausgewählt aus der Gruppe bestehend aus koordinationspolymerem Catena-µ-2,2',2"-nitrilotrisethanol-perchlorato-Metall-Innerkomplex und koordinationspolymerem Catena-µ-2,2',2"-nitrilotrisethanol-trifluormethansulfonato (Triflato)-Metall-Innerkomplex enthalten.

Der stabilisatoraktive Stoff (B) kann somit einen solchen Perchlorato-Innerkomplex, mehrere solcher Perchlorato-Innerkomplexe und keinen Triflato-Innerkomplex, einen solchen Triflato-Innerkomplex, mehrere solcher Triflato-Innerkomplexe und keinen Perchlorato-Innerkomplex oder sowohl Perchlorato- als auch Triflatokomplexe enthalten.

Darüber hinaus kann der stabilisatoraktive Stoff (B) weitere Stabilisatoren enthalten.

Weiterhin bevorzugt enthält der stabilisatoraktive Stoff (B) nur die oben genannte Kombination aus Blei- oder Organozinnstabilisator und Innerkomplex.

Bevorzugt handelt es sich bei Verwendung eines koordinationspolymeren Catena-µ-2,2',2"-nitrilotrisethanol-perchlorato(triflato)-Metall-Innerkomplexes für den mindestens einen stabilisatoraktiven Stoff (B) um einen Innerkomplex mit der Monomereinheit der Formel (I) als stabilisatoraktiven Stoff (B) 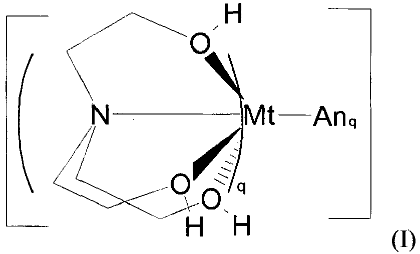 wobei
Mt = Li, Na, K, Mg, Ca, Sr, Ba und Zn;
An = OClO₃ oder OS(O₂)CF₃;
q = 1 oder 2 ist.

Bevorzugt ist An = OClO₃. Eine bevorzugte Ausführungsform ist daher auch ein stabilisatoraktiver Stoff (B), bei dem der mindestens eine Innerkomplex ein koordinationspolymerer Catena-µ-2,2',2"-nitrilotrisethanol-perchlorato-Metall-Innerkomplex ist.

Weiterhin bevorzugt ist Mt = Na. Eine bevorzugte Ausführungsform ist daher auch ein stabilisatoraktiver Stoff (B) bei dem das Metall des Innerkomplexes Natrium ist.

Folgende Innerkomplexe seien aufgeführt, wobei perchlorato= Pc und triflato = Tf als Abkürzungen verwendet werden:
[(TEA) NaPc], [(TEA) NaTf], [(TEA) LiPc], [(TEA) LiTf], [(TEA) KPc], [(TEA) KTf], [(TEA)₂ Mg(Pc)₂], [(TEA)₂ Mg(Tf)₂], [(TEA)₂ Ca(Pc)₂], [(TEA)₂ Ca(Tf)₂], [(TEA)₂ Sr(Pc)_{2]}, [(TEA)₂ Sr(Tf)₂], [(TEA)₂ Zn(Pc)₂], [(TEA)₂ Zn(Tf)₂], [(TEA)₂ Ba(Pc)₂], [(TEA)₂ Ba(Tf)₂].

Ebenfalls bevorzugt ist als stabilisatoraktiven Stoff (B) die Verwendung des koordinationspolymeren Catena-µ- 2,2',2"-nitrilotrisethanol-perchlorato-Natrium-Innerkomplexes.

Darüber hinaus kommen als stabilisatoraktive Stoffe (B) auch Stoffe in Frage, die ausgewählt sind aus der Gruppe bestehend aus:
- Anorganische und Organische Basen
- Epoxide und Glyzidylverbindungen
- β-Diketone und β-Ketoester
- Polyole und Zuckeralkohole
- Phosphorigsäureester (Phosphite)

### Anorganische und Organische Basen

Als stabilisatoraktiven Stoffe (B) eignen sich anorganische Basen wie Oxide oder Hydroxide des Magnesiums, Kalziums, Bariums, Aluminiums und Zinks oder organische Basen wie Melamin, Zyanguanidin und Guanamine wie Azeto- und Benzoguanamin, Triethanolamin, Triisopropanolamin, Tripropanolamin, Triisobutanolamin, Tributanolamin und Umsetzungsprodukte von α-Olefinoxiden mit primären und sekundären Aminen.

### Epoxide und Glyzidylverbindungen

Beispiele für Epoxyverbindungen sind epoxidiertes Sojaöl, epoxidiertes Olivenöl, epoxidiertes Leinöl, epoxidiertes Rizinusöl, epoxidiertes Erdnussöl, epoxidiertes Maisöl, und epoxidiertes Baumwollsamenöl.

Beispiele für Glyzidylverbindungen sind Verbindungen mit der Glyzidylgruppe: 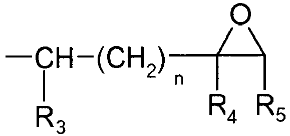 wobei diese direkt an Kohlenstoff, Sauerstoff-, Stickstoff- oder Schwefelatome gebunden ist, und worin entweder R₃ und R₅ beide Wasserstoff sind, R₄ Wasserstoff oder Methyl und n = 0 ist, oder worin R₃ und R₅ zusammen -CH₂-CH₂- oder -CH₂-CH₂-CH₂- bedeuten, R₄ dann Wasserstoff und n = 0 oder 1 ist.

I) Glyzidyl- und β-Methylglyzidylester erhältlich durch Umsetzung einer Verbindung mit mindestens einer Karboxylgruppe im Molekül und Epichlorhydrin bzw. Glyzerindichlorhydrin bzw. β-Methyl-epichlorhydrin. Die Umsetzung erfolgt zweckmäßig in Gegenwart von Basen.

Als Verbindungen mit mindestens einer Karboxylgruppe im Molekül können aliphatische Karbonsäuren verwendet werden. Beispiele für diese Karbonsäuren sind Glutarsäure, Adipinsäure, Pimelinsäure, Korksäure, Azelainsäure, Sebazinsäure oder dimerisierte bzw. trimerisierte Linolsäure, Acryl- und Methacrylsäure, Kapron-, Kapryl-, Pelargonsäure, Laurin-, Myristin-, Palmitin- und Stearinsäure.

Es können aber auch zykloaliphatische Karbonsäuren eingesetzt werden, wie beispielsweise Zyklohexankarbonsäure, Tetrahydrophthalsäure, 4-Methyltetrahydrophthalsäure, Hexahydrophthalsäure oder 4-Methylhexahydrophthalsäure.

Weiterhin können aromatische Karbonsäuren Verwendung finden, wie beispielsweise Benzoesäure, Phthalsäure, Isophthalsäure, Trimellithsäure oder Pyromellithsäure.

Ebenfalls können auch karboxylterminierte Addukte, z. B. von Trimellithsäure und Polyolen, wie beispielsweise Glyzerin oder 2,2-Bis-(4-hydroxyzyklohexyl)-propan verwendet werden.
Weitere im Rahmen dieser Erfindung verwendbare Epoxidverbindungen finden sich in EP 0 506 617.

II) Glyzidyl- oder (β-Methylglyzidyl)-ether erhältlich durch Umsetzung einer Verbindung mit mindestens einer freien alkoholischen Hydroxygruppe und/oder phenolischen Hydroxygruppe und einem geeignet substituierten Epichlorhydrin unter alkalischen Bedingungen, oder in Anwesenheit eines sauren Katalysators und anschließender Alkalibehandlung.

Ether dieses Typs leiten sich beispielsweise ab von azyklischen Alkoholen, wie Ethylenglykol, Diethylenglykol und höheren Poly-(oxyethylen)-glykolen, Propan-1,2-diol, oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glyzerin, 1,1,1-Trimethylolpropan, Bistrimethylolpropan, Pentaerythrit, Sorbit, sowie von Polyepichlorhydrinen, Butanol, Amylalkohol, Pentanol, sowie von monofunktionellen Alkoholen wie Isooktanol, 2-Ethylhexanol, Isodekanol sowie C₇-C₉-Alkanol- und C₉-C₁₁-Alkanolgemischen.

Sie leiten sich aber auch beispielsweise ab von zykloaliphatischen Alkoholen wie 1,3- oder 1,4-Dihydroxyzyklohexan, Bis-(4-hydroxyzyklohexyl)-methan, 2,2-Bis-(4-hydroxyzyklohexyl)-propan oder 1,1-Bis-(hydroxymethyl)-zyklohex-3-en oder sie besitzen aromatische Kerne wie N,N-Bis-(2-hydroxyethyl)-anilin oder p,p'-Bis-(2-hydroxyethylamino)-diphenylmethan.

Die Epoxidverbindungen können sich auch von einkernigen Phenolen ableiten, wie beispielsweise von Phenol, Resorcin oder Hydrochinon; oder sie basieren auf mehrkernigen Phenolen wie beispielsweise auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dihydroxydiphenylsulfon oder auf unter sauren Bedingungen erhaltene Kondensationsprodukte von Phenolen mit Formaldehyd wie Phenol-Novolake.

Weitere mögliche endständige Epoxide sind beispielsweise: Glyzidyl-1-naphthylether, Glyzidyl-2-phenylphenylether, 2-Biphenylglyzidylether, N-(2,3-epoxypropyl)-phthalimid und 2,3-Epoxypropyl-4-methoxyphenylether.

III) (N-Glyzidyl)-Verbindungen erhältlich durch Dehydrochlorierung der Reaktionsprodukte von Epichlorhydrin mit Aminen, die mindestens ein Aminowasserstoffatom enthalten. Bei diesen Aminen handelt es sich zum Beispiel um Anilin, N-Methylanilin, Toluidin, n-Butylamin, Bis-(4-aminophenyl)-methan, m-Xylylendiamin oder Bis-(4-methylaminophenyl)-methan, aber auch N,N,O-Triglyzidyl-m-aminophenol oder N,N,O-Triglyzidyl-p-aminophenol.

Zu den (N-Glyzidyl)-Verbindungen zählen aber auch N,N'-Di-, N,N',N"-Tri- und N,N',N",N"'-Tetraglyzidylderivate von Zykloalkylenharnstoffen, wie Ethylenharnstoff oder 1,3-Propylenharnstoff, und N,N'-Diglyzidylderivate von Hydantoinen, wie von 5,5-Dimethylhydantoin oder Glykoluril und Triglyzidylisocyanurat.

IV) S-Glyzidyl-Verbindungen, wie beispielsweise Di-S-glyzidylderivate, die sich von Dithiolen, wie beispielsweise Ethan-1,2-dithiol oder Bis-(4-merkaptomethylphenyl)-ether ableiten.

V) Epoxidverbindungen mit einem Rest der obigen Formel, worin R1 und R3 zusammen-CH2-CH2- bedeuten und n 0 ist, sind Bis-(2,3-epoxyzyklopentyl)-ether, 2,3-Epoxyzyklopentylglyzidylether oder 1,2-Bis-(2,3-epoxyzyklopentyloxy)-ethan. Ein Epoxidharz mit einem Rest der obigen Formel, worin R1 und R3 zusammen -CH2-CH2-sind und n 1 bedeutet, ist beispielsweise 3,4-Epoxy-6-methyl-zyklohexankarbonsäure-(3',4'-epoxy-6'-methyl-zyklohexyl)-methylester.

Geeignete endständige Epoxide sind beispielsweise:
a) flüssige Bisphenol-A-diglyzidylether wie Araldit®GY 240, Araldit®GY 250, Araldit®GY 260, Araldit®GY 266, Araldit®GY 2600, Araldit®MY 790 und Epicote® 828 (BADGE);
b) feste Bisphenol-A-diglyzidylether wie Araldit®GT 6071, Araldit®GT 7071, Araldit®GT 7072, Araldit®GT 6063, Araldit®GT 7203, Araldit®GT 6064, Araldit®GT 7304, Araldit®GT 7004, Araldit®GT 6084, Araldit®GT 1999, Araldit®GT 7077, Araldit®GT 6097, Araldit®GT 7097, Araldit®GT 7008, Araldit®GT 6099, Araldit®GT 6608, Araldit®RGT 6609, Araldit®GT 6610 und Epikote® 1002;
c) flüssige Bisphenol-F-diglyzidylether wie Araldit®GY 281, Araldit®PY 302, Araldit®PY 306 (BFDGE);
d) feste Polyglyzidylether von Tetraphenylethan wie CG Epoxy Resin®0163;
e) feste und flüssige Polyglyzidylether von Phenolformaldehyd Novolak wie EPN 1138, EPN 1139, GY 1180, PY 307 (NODGE);
f) feste und flüssige Polyglyzidylether von o-Kresolformaldehyd Novolak wie ECN 1235, ECN 1273, ECN 1280, ECN 1299 (NODGE);
g) flüssige Glyzidylether von Alkoholen wie Shell Glyzidylether® 162, Araldit®DY 0390, Araldit®DY 0391;
h) flüssige und feste Glyzidylester von Karbonsäuren wie Shell Cardura® E Terephthalsäureester, Trimellithsäureester sowie deren Mischungen Araldit®PY 284 und Araldit® P811;
i) feste heterozyklische Epoxidharze (Triglyzidylisocyanurat) wie Araldit® PT 810;
j) flüssige zykloaliphatische Epoxidharze wie Araldit®CY 179;
k) flüssige N,N,O-Triglyzidylether von p-Aminophenol wie Araldit®MY 0510;
l) Tetraglyzidyl-4-4'-methylenbenzamin oder N,N,N',N'-Tetraglyzidyldiaminophenylmethan wie Araldit®1VIY 720, Araldit®MY 721.

Vorzugsweise finden Epoxidverbindungen mit zwei funktionellen Gruppen Verwendung. Es können aber auch prinzipiell Epoxidverbindungen mit einer, drei oder mehr funktionellen Gruppen eingesetzt werden.

Vorwiegend werden Epoxidverbindungen, vor allem Diglyzidylverbindungen, mit aromatischen Gruppen eingesetzt.

Gegebenenfalls kann auch ein Gemisch verschiedener Epoxidverbindungen eingesetzt werden.

### β-Diketone und β-Ketoester

Verwendbare 1,3-Dikarbonylverbindungen sind lineare oder zyklische Dikarbonylverbindungen. Bevorzugt werden Dikarbonylverbindungen der Formel R'₁CO CHR₂-COR'₃ verwendet, worin R'₁ C₁-C₂₂-Alkyl, C₅-C₁₀-Hydroxyalkyl, C₂-C₁₈-Alkenyl, Phenyl, durch OH, C₁-C₄-Alkyl, C₁-C₄-Alkoxy oder Halogen substituiertes Phenyl, C₇-C₁₀-Phenylalkyl, C₅-C₁₂-Zykloalkyl, durch C₁-C₄-alkylsubstituiertes C₅-C₁₂-Zykloalkyl oder eine Gruppe -R'₅-S-R'₆ oder -R'₅-O-R'₆ bedeutet; R'₂ Wasserstoff, C₁-C₈-Alkyl, C₂-C₁₂-Alkenyl, Phenyl, C₇-C₁₂-Alkylphenyl, C₇-C₁₀-Phenylalkyl oder eine Gruppe -CO-R'₄ bedeutet; R'₃ eine der für R'₁ gegebenen Bedeutungen hat oder C₁-C₁₈-Alkoxy bedeutet, R'₄ C₁-C₄-Alkyl oder Phenyl bedeutet; R'₅ C₁-C₁₀-Alkylen bedeutet und R'₆ C₁-C₁₂-Alkyl, Phenyl, C₇-C₁₈-Alkylphenyl oder C₇-C₁₀-Phenylalkyl bedeutet.

Hierzu gehören die Hydroxylgruppen enthaltenden Diketone PS - EP 0.346.279 A1 und die Oxa- und Thia-diketone in PS - EP 0.307.358 A1 ebenso wie die auf Isozyanursäure basierenden Ketoester in PS - US 4,339,383.

R'₁ und R'₃ als Alkyl können insbesondere C₁-C₁₈-Alkyl sein, z. B. Methyl, Ethyl, n-Propyl, Isopropyl, n-Butyl, tert Butyl, Pentyl, Hexyl, Heptyl, Oktyl, Dezyl, Dodezyl oder Oktadezyl.

R'₁ und R'₃ als Hydroxyalkyl stellen insbesondere eine Gruppe -(CH₂)ₙ-OH dar, worin n 5, 6 oder 7 ist.

R'₁ und R'₂ als Alkenyl können beispielsweise Vinyl, Allyl, Methallyl, 1-Butenyl, 1-Hexenyl oder Oleyl bedeuten, vorzugsweise Allyl.

R'₁ und R'₃ als durch OH, Alkyl, Alkoxy oder Halogen substituiertes Phenyl können beispielsweise Tolyl, Xylyl, tert Butylphenyl, Methoxyphenyl, Ethoxyphenyl, Hydroxyphenyl, Chlorphenyl oder Dichlorphenyl sein.

R'₁ und R'₃ als Phenylalkyl sind insbesondere Benzyl. R'₂ und R'₃ als Zykloalkyl oder Alkylzykloalkyl sind insbesondere Zyklohexyl oder Methylzyklohexyl.

R'₂ als Alkyl kann insbesondere C₁-C₄-Alkyl sein. R'₂ als C₂-C₁₂-Alkenyl kann insbesondere Allyl sein. R'₂ als Alkylphenyl kann insbesondere Tolyl sein. R'₂ als Phenylalkyl kann insbesondere Benzyl sein. Vorzugsweise ist R'₂ Wasserstoff. R'₃ als Alkoxy kann z.B. Methoxy, Ethoxy, Butoxy, Hexyloxy, Oktyloxy, Dodezyloxy, Tridezyloxy, Tetradezyloxy oder Oktadezyloxy sein. R'₅ als C₁-C₁₀-Alkylen ist insbesondere C₂-C₄-Alkylen. R'₆ als Alkyl ist insbesondere C₄-C₁₂-Alkyl, z. B. Butyl, Hexyl, Oktyl, Dezyl oder Dodezyl.

R'₆ als Alkylphenyl ist insbesondere Tolyl. R'₆ als Phenylalkyl ist insbesondere Benzyl.

Beispiele für 1,3-Dikarbonylverbindungen der vorstehenden allgemeinen Formel sowie deren Alkali-, Erdalkali- und Zinkchelate sind Azetylazeton, Butanoylazeton, Heptanoylazeton, Stearoylazeton, Palmitoylazeton, Lauroylazeton, 7-tert.-Nonylthioheptandion-2,4, Benzoylaceton, Dibenzoylmethan, Lauroylbenzoylmethan, Palmitoylbenzoylmethan, Stearoylbenzoylmethan, Isooktylbenzoylmethan, 5-Hydroxykapronylbenzoylmethan, Tribenzoylmethan, Bis(4-methylbenzoyl)methan, Benzoyl-p-chlorbenzoylmethan, Bis(2-hydroxybenzoyl)methan, 4-Methoxybenzoylbenzoylmethan, Bis(4-methoxybenzoyl)methan, 1-Benzoyl-1-azetylnonan, Benzoyl-azetylphenylmethan, Stearoyl-4-methoxybenzoylmethan, Bis(4-tert-butylbenzoyl)methan, Benzoylformylmethan, Benzoyl-phenylazetylmethan, Biszyklohexanoyl-methan, Di-pivaloyl-methan, 2-Azetyl-zyklo-pentanon, 2-Benzoylzyklopentanon, Diazetessigsäuremethyl-, -ethyl- und -allylester, Benzoyl-, Propionyl- und Butyryl-azetessigsäuremethyl- und -ethylester, Triazetylmethan, Azetessigsäuremethyl-, -ethyl-, -hexyl-, -oktyl-, -dodezyl- oder -oktadezylester, Benzoylessigsäuremethyl-, -ethyl-, -butyl-, -2-ethylhexyl-, -dodezyl- oder -oktadezylester, sowie Propionyl- und Butyrylessigsäure-C₁-C₁₈-alkylester. Stearoylessigsäureethyl-, -propyl-, - butyl-, -hexyl- oder -oktylester sowie mehrkernige β-Ketoester wie in PS - EP-A 0 433 230 beschrieben und Dehydrazetsäure sowie deren Zink-, Magnesium- oder Alkalisalze. Bevorzugt sind Ca-, Mg- und Zn-Salze des Azetylazetons und der Dehydrazetsäure.

Besonders bevorzugt sind 1,3-Diketoverbindungen der obigen Formel, worin R'₁ C₁-C₁₈-Alkyl, Phenyl, durch OH, Methyl oder Methoxy substituiertes Phenyl, C₇-C₁₀-Phenylalkyl oder Zyklohexyl ist, R'₂ Wasserstoff ist und R'₃ eine der für R'₁ gegebenen Bedeutungen hat. Ebenso gehören hierzu heterozyklische 2,4-Dione wie N-Phenyl-3-azetylpyrrolidin-2,4-dion. Weitere Vertreter diese Kategorie sind beschrieben in PS - EP 0.734.414 A1. Die 1,3-Diketoverbindungen können in einer Menge von beispielsweise 0,01 bis 10, zweckmäßig 0,01 bis 3 und insbesondere 0,01 bis 2 Gew.-Teilen, bezogen auf 100 Gew.-Teile PVC, angewendet werden.

### Polyole und Zuckeralkohle

Als Verbindungen dieses Typs kommen beispielsweise in Betracht: Pentaerythrit, Dipentaerythrit, Tripentaerythrit, Trimethylolethan, Bistrimethylolpropan, Inosit, Polyvinylalkohol, Bistrimethylolethan, Trimethylolpropan, Sorbit, Maltit, Isomaltit, Lycasin, Mannit, Laktose, Leukrose, Tris-(hydroxyethyl)isocyanurat, Palatinit, Tetramethylzyklohexanol, Tetramethylolzyklopentanol, Tetramethylolpyranol, Glyzerin, Diglyzerin, Polyglyzerin, Thiodiglyzerin oder 1-O-α-D-Glycopyranosyl-D-mannit-dihydrat. Bevorzugt sind Disaccharidalkohole. Verwendung finden auch Polyolsirupe wie Sorbit-, Mannit- und Maltitsirup. Die Polyole können in einer Menge von beispielsweise 0,01 bis 20, zweckmäßig von 0,1 bis 20 und insbesondere von 0,1 bis 10 Gew.-Teilen, bezogen auf 100 Gew.-Teile PVC, angewendet werden. Bevorzugt ist Tris-(hydroxyethyl)isocyanurat.

### Phosphorigsäureester (Phosphite)

Beispiele hierfür sind Trioktyl-, Tridezyl-, Tridodezyl-, Tritridezyl-, Tripentadezyl-, Trioleyl, Tristearyl-, Triphenyl-, Trilauryl-, Trikresyl-, Tris-nonylphenyl-, Tris-2,4-t-butylphenyl- oder Trizyklohexylphosphit. Weitere geeignete Phosphite sind verschieden gemischte Aryl-dialkyl- bzw. Alkyl-diarylphosphite wie Phenyldioktyl-, Phenyldidezyl-, Phenyldidodezyl-, Phenylditridezyl-, Phenylditetradezyl-, Phenyldipentadezyl-, Oktyldiphenyl-, Dezyldi-phenyl-, Undezyldiphenyl-, Dodezyldiphenyl-, Tridezyldiphenyl-, Tetradezyldiphenyl-, Pentadezyldiphenyl-, Oleyldiphenyl-, Stearyldiphenyl- und Dodezyl-bis-2,4-di-t-butyl-phenylphosphit. Weiterhin können auch Phosphite verschiedener Di- bzw. Polyole vorteilhaft verwandt werden, z.B. Tetraphenyldipropylenglykoldiphosphit, Poly(dipropylen-glykol)phenylphosphit, Tetra-isodezyl-dipropylenglykoldiphosphit, Tris-dipropylenglykol-phosphit, Tetramethylolzyklohexanol-dezyldiphosphit, Tetramethylolzyklohexanolbutoxy-ethoxy-ethyldiphosphit, Tetramethylolzyklohexanolnonylphenyl-diphosphit, Bis-nonyl-phenyl-di-trimethylolpropandiphosphit, Bis-2-butoxyethyl-d i-trimethylo Ipropandiphosphit, Trishydroxyethylisocyanurathexadezyltriphosphit, Didezylpentaerythritdiphosphit, Distearylpentaerythritdiphosphit, Bis-2,4-di-t-butylphenylpentaerythritdiphosphit, sowie Gemische dieser Phosphite und Aryl/alkylphosphit-Gemische der statistischen Zusammen-setzung (H₁₉C₉-C₆H₄)O_{1,5}P(OC_{12,13}H_{25,27})_{1,5} oder (C₈H₁₇-C₆H₄-O-)₂P(i-C₈H₁₇O),(H₁₉C₉-C₆H₄)O_{1,5}P(OC_{9,11}H_{19,23})_{1,5}. Technische Beispiele sind Naugard P, Mark CH300, Mark CH301, Mark CH302 und Mark CH55 (Hersteller Crompton Corp. USA). Die organischen Phosphite können in einer Menge von beispielsweise 0,01 bis 10, zweckmäßig 0,05 bis 5 und insbesondere 0,1 bis 3 Gew.-Teilen, bezogen auf 100 Gew.-Teile PVC, angewendet werden.

Die Hilfs- und Zusatzstoffe (C) können ausgewählt sein aus der Gruppe bestehend aus
- Acrylate
- UV-Absorber und Lichtschutzmittel
- Optische Aufheller
- Pigmente
- Treibmittel
- Antistatika
- Weichmacher.

### Acrylate

Das Acrylat dient im vorliegenden Fall als Verarbeitungshilfsmittel, also als Hilf- und Zusatzstoff (C).

Als für die Verarbeitung geeignete Hilfsmittel auf Acrylatbasis sind dem Fachmann bekannt.

In einer besonders bevorzugten Ausführungsform der vorliegenden Erfindung wird als Acrylat ein Polymethylmethacrylat verwendet. Ein Beispiel hierfür ist Paraloid K 125® von Rohm & Haas.

### UV-Absorber und Lichtschutzmittel

Beispiele dafür sind 2-(2'-Hydroxyphenyl)-benztriazole, z.B. 2-(2'-Hydroxy-5'-methylphenyl)-benztriazol, 2-Hydroxybenzophenone, Ester von gegebenenfalls substituierten Benzoesäuren, z.B. 4-tert-Butyl-phenylsalizylat, Phenylsalizylat, Acrylate, Nickelverbindungen, Oxalsäurediamide, z.B. 4,4'-Di-oktyloxy-oxanilid, 2,2'-Di-oktyloxy-5,5'-di-tert-butyl-oxanilid, 2-(2-Hydroxyphenyl)-1,3,5-triazine, z.B. 2,4,6-Tris(2-hydroxy-4-oktyloxyphenyl)-1,3,5-triazin, 2-(2-Hydroxy-4-oktyloxyphenyl)-4,6-bis-(2,4-dimethylphenyl)-1,3,5-triazin, sterisch gehinderte Amine auf Basis von Tetramethylpiperidin bzw. Tetramethylpiperazinon oder Tetramethylmorpholinon, z.B. Bis(2,2,6,6-tetramethyl-piperidin-4-yl)-sebazat, Bis(2,2,6,6-tetramethyl-piperidin-4-yl)-succinat sowie Benzoxazinone wie 1,4-Bis-benzoxazinonyl-benzol.

### Optische Aufheller

Beispiele hierfür sind Bis-benzol(1,4)-oxazole, Phenylkumarine und Bis-styryl-biphenyle wie 4-Methyl-7-diethylaminokumarin, 3-Phenyl-7-(4-methyl-6-butoxybenzoxazol)-kumarin, 4,4'-Bis-(benzoxazol-2-yl)-stilben und 1,4-Bis(-benzoxazol-2-yl)-naphthalin. Bevorzugt sind Lösungen optischer Aufheller in einem Weichmacher, beispielweise DOP.

### Pigmente

Ebenfalls als Bestandteil des erfindungsgemäßen Stabilisatorsystems geeignet sind Pigmente. Geeignete Stoffe sind dem Fachmann bekannt. Beispiele für anorganische Pigmente sind TiO₂, Pigmente auf Zirkonoxidbasis, BaSO₄, Zinkoxid (Zinkweiss) und Lithopone (Zinksulfid/Bariumsulfat), Ruß, Ruß-Titandioxid-Mischungen, Eisenoxidpigmente, Sb₂O₃, (Ti,Ba,Sb)O₂, Cr₂O₃, Spinelle wie Kobaltblau und Kobaltgrün, Cd(S,Se), Ultramarinblau. Organische Pigmente sind z.B. Azopigmente, Phthalozyaninpigmente, Chinacridonpigmente, Perylenpigmente, Diketopyrrolopyrrolpigmente und Anthrachinon-pigmente. Bevorzugt ist TiO₂ auch in mikronisierter Form. Eine Definition und weitere Beschreibungen finden sich im "Handbook of PVC Formulating", E. J.Wickson, John Wiley & Sons, New York, 1993.

### Treibmittel

Treibmittel sind z.B. organische Azo- und Hydrazoverbindungen, Tetrazole, Oxazine, Isatinsäureanhydrid, N-Methylisatinsäureanhydrid, sowie Soda und Natriumbikarbonat. Bevorzugt sind Azodikarbonamid und Natriumbikarbonat sowie deren Mischungen. Ganz besonders bevorzugt ist Isatinsäureanhydrid oder N-Methylisatinsäureanhydrid speziell in Weich-PVC oder PVC-Halbhart.

### Antistatika

Antistatika werden eingeteilt in nichtionische(a), anionische(b), kationische(c) und amphotere(d) Klassen. Zu (a) gehören Fettsäureethoxylate, Fettsäureester, ethoxylierte Fettalkylamine, Fettsäurediethanolamide und ethoxylierte Phenole und Alkohole sowie Polyglykolmonofettsäureester. Zu (b) gehören Alkalifettalkansulfonate und Phosphorsäure-bis-fettalkoholester-alkalisalze. Zu (c) gehören quaternäre Fettalkylammoniumsalze und zu (d) gehören Fettalkylbetaine und Fettalkylimidazolinbetaine. Einzelne bevorzugte Verbindungen sind Laurinsäurediethanolamid, Myristyldiethanolamin, Na-oktadezyl-sulfonat und Na-bis-oktadezylphosphat.

### Weichmacher

Ebenfalls als Hilfs- und Zusatzstoffe (C) für die granulierte Stabilisatormischung gemäß der vorliegenden Erfindung geeignet sind organische Weichmacher. Als organische Weichmacher kommen beispielsweise solche aus den folgenden Gruppen in Betracht:
(i) Phthalsäureester wie bevorzugt Di-2-ethylhexyl-, Di-iso-nonyl- und Di-iso-dezyl-phthalat, die auch unter den gebräuchlichen Abkürzungen DOP (Dioktylphthalat, Di-2-ethylhexyl-phthalat), DINP (Diisononylphthalat), DIDP (Diisodezylphthalat) bekannt sind
(ii) Ester aliphatischer Dikarbonsäuren, insbesondere Ester von Adipin-, Azelain- und Sebazinsäure, bevorzugt Di-2-ethylhexyladipat und Di-iso-oktyladipat
(iii) Trimellitsäureester, beispielsweise Tri-2-ethylhexyltrimellitat, Tri-iso-dezyltrimellitat (Gemisch), Tri-iso-tridezyltrimellitat, Tri-iso-oktyltrimellitat (Gemisch) sowie Tri-C₆-C₈-alkyl, Tri-C₆-C₁₀-alkyl-, Tri-C₇-C₉-alkyl- und Tri-C₉-C₁₁-alkyl-trimellitate; gebräuchliche Abkürzungen sind TOTM (Trioktyltrimellitat, Tri-2-ethylhexyl-trimellitat), TIDTM (Triisodezyltrimellitat) und TITDTM (Triisotridezyltrimellitat)
(iv) Epoxyweichmacher; in der Hauptsache sind das epoxidierte ungesättigte Fettsäuren z.B. epoxidiertes Sojabohnenöl
(v) Polymerweichmacher: Die gebräuchlichsten Ausgangsmaterialien für ihre Herstellung sind Dikarbonsäuren wie Adipin-, Phthal-, Azelain- und Sebazinsäure; Diole wie 1,2-Propandiol, 1,3-Butandiol, 1,4-Butandiol, 1,6-Hexandiol, Neopentylglykol und Diethylenglykol, (s. ADMEX^{®}-Typen der Velsicol Corp. und PX-8.11 der Asahi Denka)
(vi) Phosphorsäureester: Eine Definition dieser Ester ist im weiter vom genannten " TASCHENBUCH der Kunststoffadditive " Kapitel 5.9.5, SS. 408 - 412, zu finden. Beispiele für solche Phosphorsäureester sind Tributylphosphat, Tri-2-ethylbutylphosphat, Tri-2-ethylhexylphosphat, Trichlorethylphosphat, 2-Ethyl-hexyl-di-phenylphosphat, Kresyldi-phenylphosphat, Resorzin-bis-diphenylphosphat, Triphenylphosphat, Trikresylphosphat und Trixylenylphosphat; bevorzugt sind Tri-2-ethylhexyl-phosphat sowie Reofos^{®} 50 und 95 (Ciba Spezialitätenchemie)
(vii) Chlorierte Kohlenwasserstoffe (Paraffine)
(viii) Kohlenwasserstoffe
(ix) Monoester, z.B. Butyloleat, Phenoxyethyloleat, Tetrahydrofurfuryloleat und Alkylsulfonsäureester
(x) Glykolester, z.B. Diglykolbenzoate
(xi) Zitronensäureester, z.B. Tributylzitrat und Azetyltributylzitrat wie in PS - WO 02/05206 beschrieben
(xii) Perhydrophthal-, -isophthal- und -terephthalester sowie Perhydroglykol- und diglykolbenzoatester; bevorzugt ist Perhydro-diisononylphthalat (Hexamoll^{®} DINCH - Hersteller BASF) wie in PS - DE 197.56.913 A1, DE 199.27.977 A1, DE 199.27.978 A1 und DE 199.27.979 A1 beschrieben.
(xiii) Rizinussöl basierte Weichmacher (Soft-N-Safe^{®}, Hersteller Fa. DANISCO)
(xiv) Terpolymere Keton-Ethylen-Ester Elvaloy^{®} KEE, (Elvaloy^{®} 741, Elvaloy^{®} 742, Hersteller Fa. DuPont)

Eine Definition dieser Weichmacher und Beispiele für solche sind in "TASCHENBUCH der Kunststoffadditive", R. Gächter/H. Müller, Carl Hanser Verlag, 3. Aufl., 1989, Kapitel 5.9.6, Seiten 412-415, sowie in "PVC Technology ", W.V. Titow, 4th. Ed., Elsevier Publ., 1984, Seiten 165-170 angegeben. Es können auch Mischungen unterschiedlicher Weichmacher verwandt werden. Die Weichmacher können in einer Menge von beispielsweise von bis zu etwa 99,5 Gew.-%, insbesondere bis zu etwa 30 Gew.-%, bis zu etwa 20 Gew.-% oder bis zu etwa 10 Gew.-% enthalten. Im Rahmen einer bevorzugten Ausführungsform der vorliegenden Erfindung beträgt die Untergrenze für die beschriebenen Weichmacher als Bestandteil der erfindungsgemäßen Stabilisatorsysteme etwa 0,1 Gew.-% oder mehr, beispielsweise etwa 0,5 Gew.-%, 1 Gew.-%, 2 Gew.-% oder 5 Gew.-%.

Definitionen und Beispiele für weitere Zusätze wie Schlagzähmodifikatoren und Verarbeitungshilfen, Geliermittel, Biozide, Metalldesaktivatoren, Flammschutzmittel, Antifogging-Agents sowie Kompatibilisatoren sind beschrieben in "Handbuch der Kunststoffadditive", R. Gächter/H. Müller, Carl Hanser Verlag, 3. Aufl., 1989, sowie 4. Aufl. 2001 und im "Handbook of Polyvinyl Chloride Formulating" E. J. Wickson, J. Wiley & Sons, 1993, sowie in "Plastics Additives" G. Pritchard, Chapman & Hall, London, 1st Ed., 1998. Schlagzähmodifikatoren sind ferner ausführlich beschrieben in "Impact Modifiers for PVC", J. T. Lutz/D. L. Dunkelberger, John Wiley & Sons, 1992.

Die Stoffe (A), (B) und (C) liegen in der Mischung beispielsweise in den folgenden Gew.% vor (bezogen auf 100 Gew.-% Gesamtmischung):
(A): 5-70 Gew.-%, bevorzugt 20-45 Gew.-%, insbesondere bevorzugt 30-35 Gew.%;
(B): 5-70 Gew.-%, bevorzugt 30-50 Gew.-%, insbesondere bevorzugt 40-50 Gew.%;
(C): 5-70 Gew.-%, bevorzugt 20-40 Gew.-%, insbesondere bevorzugt 20-30 Gew.-%.

Die angegebenen Anteile sind nur beispielhaft bzw. bevorzugt und können auch außerhalb der angegebenen Bereiche liegen. Sofern ein Stoff mehreren Komponenten (A), (B), (C) zugeordnet werden kann, ist er gemäß der Reihenfolge (A)-(B)-(C) zur erstgenannten Komponente einzuordnen.

In einer weiteren Ausführungsform der Erfindung wird zunächst die erfindungsgemäße Mischung gemäß Verfahrensschritt (a) im Extruder bei 40°C bis 100°C, bevorzugt 55°C bis 65°C; insbesondere bevorzugt bei 60°C erhitzt. Durchschnittlich kann hier für die Verweilzeit im Extruder ein Zeitraum von nicht mehr als 10 Minuten veranschlagt werden.

Als Extruder kommen alle gängigen, dem Fachmann bekannten Extruder, wie beispielsweise gleichlaufende, gegenlaufende, parallel laufende oder konisch laufende Einschnecken- oder Doppelschneckenextruder in Frage. Außerdem können auch verschiedene Kneter verwendet werden.

In Verfahrensschritt (b) wird die zuvor im Extruder teilweise geschmolzene, verdichtete erfindungsgemäße Mischung durch eine Lochplatte gepresst.

In Verfahrensschritt (c) erfolgt ein Heißabschlag, d.h. die teilviskosen Stränge werden quer in einem Wasserstrom durchtrennt. Durch diesen Vorgang erhält man nicht vollständig ausgehärtete, knetbare Granulatkörnchen, die anschließend in einem Wasserstrom in Verfahrensschritt (d) zunehmend von außen nach innen aushärten.

In Verfahrensschritt (e) erfolgt die Ausleitung der granulierten, nicht zusammenklebenden Stabilisatormischung aus dem Wasserbad.

In Verfahrensschritt (f) werden die aus dem Wasser geleiteten granulierten Stabilisatormischungen getrocknet und die fertigen granulierten Stabilisatormischungen erhalten.

Der Trocknungsvorgang (f) erfolgt vorzugsweise aus Sieb mit Gebläse bzw. über ein Sieb mit Vibrationstrockung und evtl. ein (beheizbares) Gebläse. Im Rahmen der Erfindung sind aber auch andere Trocknungsmethoden wie z. B Zentrifuge oder Bandtrockner möglich.

Der Vorteil des erfindungsgemäßen Verfahrens zur Herstellung einer granulierten Stabilisatormischung für halogenhaltige Kunststoffe durch Unterwassergranulierung liegt darin, dass dieses Verfahren sich durch einen geringen Platzbedarf, hohe Flexibilität, minimale Ausfallzeiten, geringe Abfallmengen, schnelle und einfache Änderung der Granulatgröße, kaum Emissionen und vor allem gegenüber den Pressgranulaten weniger Staub und Abrieb sowie eine bessere Verteilbarkeit in Verarbeitungsschritten sowie damit verbunden ein qualitativ hochwertiges Produkt bei gleich bleibender Qualität auszeichnet.

Vorteilhaft ist außerdem die gegenüber bisherigen Verfahren zur Herstellung von Pressgranulaten vergleichsweise niedrige Verfahrenstemperatur und die geringe Verweilzeit im Reaktionsgefäß, was wiederum gegenüber Pastillen aus dem Schmelzverfahren eine geringere thermische und zeitliche Belastung, eine wesentliche Energieersparnis sowie dadurch die Verwendung von Komponenten ermöglicht, die ansonsten miteinander reagieren oder thermisch instabil sind.

Hinzu kommt, dass abhängig von der Temperatur und der Zusammensetzung des Stabilisators unterschiedliche Mengen an Gleitmitteln und/oder niedrigschmelzenden Komponenten aufschmelzen. Hierdurch kann die Viskosität des Extrudats gezielt eingestellt werden.

Ein weiterer Vorteil des erfindungsgemäßen Verfahrens und des Produkts ist die Tatsache, dass verglichen mit Pressgranulaten, die mittels der Unterwassergranulierung hergestellten Granulate einen deutlich verringerten Siebrückstand im Dryblend bei 120°C Mischtemperatur aufweisen. Ferner haben die Granulatkörner vergleichbare Partikelgrößen, die je nach Verwendung individuell in der Größe - beispielsweise durch Verwendung verschiedener Lochplatten - angepasst werden kann.

Ein weiterer Gegenstand der vorliegenden Erfindung ist eine granulierte Stabilisatormischung erhältlich nach dem erfindungsgemäßen Verfahren.

Ein weiterer Gegenstand der vorliegenden Erfindung ist die Verwendung der erfindungsgemäßen granulierten Stabilisatormischungen zur Stabilisierung eines halogenhaltigen, insbesondere chlorhaltigen, Polymers, wie Polyvinylchlorid (PVC).

Beispiele für die zu stabilisierenden chlorhaltigen Polymere sind Polymere des Vinylchlorids, Vinylidenchlorids, Vinylharze enthaltend Vinylchlorideinheiten, wie Kopolymere des Vinylchlorids und Vinylester von aliphatischen Säuren, insbesondere Vinylazetat, Kopolymere des Vinylchlorids mit Estern der Acryl- und Methacrylsäure und mit Acrylnitril, Kopolymere des Vinylchlorids mit Dienverbindungen und ungesättigten Dikarbonsäuren oder deren Anhydride, wie Kopolymere des Vinylchlorids mit Diethylmaleat, Diethylfumarat oder Maleinsäureanhydrid, nachchlorierte Polymere und Kopolymere des Vinylchlorids, Kopolymere des Vinylchlorids und Vinylidenchlorids mit ungesättigten Aldehyden, Ketonen und anderen, wie Acrolein, Krotonaldehyd, Vinylmethylketon, Vinylmethylether, Vinylisobutylether und ähnliche; Polymere des Vinylidenchlorids und Kopolymere desselben mit Vinylchlorid und anderen polymerisierbaren Verbindungen; Polymere des Vinylchlorazetates und Dichlordivinylethers; chlorierte Polymere des Vinylazetates, chlorierte polymere Ester der Acrylsäure und der α-substituierten Acrylsäure; Polymere von chlorierten Styrolen, zum Beispiel Dichlorstyrol; Chlorkautschuke; chlorierte Polymere des Ethylens; Polymere und nachchlorierte Polymere von Chlorbutadiens und deren Kopolymere mit Vinylchlorid, chlorierte Natur- und Synthesekautschuke, sowie Mischungen der genannten Polymere unter sich oder mit anderen polymerisierbaren Verbindungen. Im Rahmen dieser Erfindung sind unter PVC auch Copolymerisate des Vinylchlorids mit polymerisierbaren Verbindungen wie Acrylnitril, Vinylacetat oder ABS zu verstehen, wobei es sich um Suspensions-, Masse- oder Emulsionspolymerisate handeln kann.

Bevorzugt ist ein PVC-Homopolymer, auch in Kombination mit Polyacrylaten oder Polymethacrylaten.

Ferner kommen auch Pfropfpolymerisate von PVC mit EVA, ABS und MBS in Betracht, ebenso Pfropfpolymerisate von PVC mit PMMA. Bevorzugte Substrate sind auch Mischungen der vorstehend genannten Homo- und Kopolymerisate, insbesondere Vinylchlorid-Homopolymerisate, mit anderen thermoplastischen oder/und elastomeren Polymeren, insbesondere Blends mit ABS, MBS, NBR, SAN, EVA, CPE, MBAS, PMA, PMMA, EPDM und Polylaktonen, insbesondere aus der Gruppe ABS, NBR, NAR, SAN und EVA. Die verwandten Abkürzungen für die Kopolymerisate sind dem Fachmann geläufig und bedeuten folgendes: ABS Acrylnitril-Butadien-Styrol; SAN Styrol-Acrylnitril; NBR Acrylnitril-Butadien; NAR Acrylnitril-Acrylat; EVA Ethylen-Vinylazetat. Es kommen insbesondere auch Styrol-Acrylnitril-Kopolymerisate auf AcrylatBasis (ASA) in Betracht. Bevorzugt als Komponente sind in diesem Zusammenhang Polymerzusammensetzungen, die als Komponenten (i) und (ii) eine Mischung aus 25-75 Gew.-% PVC und 75-25 Gew.-% der genannten Kopolymerisate enthalten. Von besonderer Bedeutung sind als Komponente Zusammensetzungen aus (i) 100 Gewichtsteilen PVC und (ii) 0-300 Gewichtsteilen ABS und/oder mit SAN modifiziertes ABS und 0-80 Gewichtsteilen der Kopolymeren NBR, NAR und/oder EVA, insbesondere jedoch EVA.

Weiterhin kommen zur Stabilisierung im Rahmen dieser Erfindung auch insbesondere Rezyklate chlorhaltiger Polymere in Frage, wobei es sich hierbei um die oben näher beschriebenen Polymere handelt, welche durch Verarbeitung, Gebrauch oder Lagerung eine Schädigung erfahren haben. Besonders bevorzugt ist PVC-Rezyklat. Ein weiterer Einsatz des erfindungsgemäßen Stabilisatorsystems beruht darin, dass dem Fertigartikel aus Hart- oder Weich-PVC antistatische Eigenschaften verliehen werden können. Auf diese Weise ist es möglich, den Einsatz teurer Antistatika zu reduzieren. Bevorzugt für diese Anwendung ist Weich-PVC oder PVC-Halbhart.

Weiterhin betrifft die vorliegende Erfindung Gegenstände, die eine erfindungsgemäße Zusammensetzung enthalten. Hierbei handelt es sich vorzugsweise um Gebrauchsgegenstände. Beispiele hierfür sind Holz-Kunstoff Verbundwerkstoffe (WPC = Wood Plastic Composites), Folien, Profile, Fußbodenbeläge, KFZ-Teile, Wandtapeten, Schläuche, Spritzgussteile, Drahtummantelungen, Rohre oder Platten.

Weiterhin betrifft die vorliegende Erfindung die Verwendung einer erfindungsgemäßen Zusammensetzung zur Herstellung eines erfindungsgemäßen Gegenstandes.

Ein weiterer Gegenstand der Erfindung sind Gebrauchsmittel (Gebrauchsgegenstände), die insbesondere PVC und erfindungsgemäße granulierte Stabilisatormischungen enthalten.

Bevorzugt ist auch die Verwendung von Gebrauchsartikeln, die sich durch eine besondere feine Schaumstruktur auszeichnen. Dies gilt für Hart-, Weich- und Halbhart-PVC. Besonderes wichtig ist dieser Aspekt bei Tapeten und Fußböden aus Weich-PVC. Normalerweise sind Schwermetallverbindungen wie Zn- oder Sn-Stabilisatoren als Kicker zur Erzielung eines feinen Schaumes erforderlich. Überraschend wurde gefunden, dass TEA-Metall-Innerkomplexe eine Kickerwirkung auf Isatinsäure- oder N-Methylisatinsäureanhydrid ausüben, was die Erzielung einer Feinschaumstruktur gewährleistet.

Die erfindungsgemäßen Zusammensetzungen eignen sich insbesondere, in Form von Hart-Rezepturen, für Hohlkörper (Flaschen), Verpackungsfolien (Tiefziehfolien), Blasfolien, "Crash Pad"-Folien (Automobile), Rohre, Schaumstoffe, Schwerprofile (Fensterrahmen), Lichtwandprofile, Bauprofile, Folien, Blisterpackungen (auch hergestellt nach dem Luvithermverfahren), Profile, Sidings, Fittings, Bürofolien, Margarinebecher, Pralinenverpackungen und Apparategehäuse, Isolatoren, Computergehäuse und Bestandteile von Haushaltsgeräten sowie für Elektronikanwendungen insbesondere im Halbleiterbereich. Ganz besonders geeignet sind diese zur Herstellung von Fensterprofilen mit hohem Weißgrad und Oberflächenglanz.

Bevorzugte andere Zusammensetzungen in Form von Halbhart- und Weich-Rezepturen sind für Drahtummantelungen, Kabelisolierungen, Dekorationsfolien, Dachfolien, Schaumstoffe, Agrarfolien, Schläuche, Dichtungsprofile, Fußböden, Tapeten, KFZ-Teile, Weich-Folien, Spritzgussteile (Blasformen,), Bürofolien und Folien für Traglufthallen geeignet. Beispiele für die Anwendung der erfindungsgemäßen Zusammensetzungen als Plastisole sind Spielwaren (Rotationsformen), Kunstleder, Fußböden, Textilbeschichtungen, Tapeten, Coil-Coatings und Unterbodenschutz für Kraftfahrzeuge, Beispiele für Sinter-PVC-Anwendungen der erfindungsgemäßen Zusammensetzungen sind Slush, Slush Mould und Coil-Coatings sowie in E-PVC für Folien hergestellt nach dem Luvithermverfahren. Näheres hierzu siehe" Kunststoffhandbuch PVC", Band 2/2, W. Becker/H. Braun, 2. Aufl. 1985, Carl Hanser Verlag, S. 1236-1277.

### Beispiele:

Eingesetzt wurden die in Tabelle 1 aufgezeigten Stoffe aus (A), (B), und (C):

**Tabelle 1**

| Stoff | Komponente | Anteil [%] | Schmelzpunkt [°C] |
|---|---|---|---|
| Moditiziertes PE Wachs | (A) | 7 | 90 - 100 |
| PE Wachs | (A) | 8 | 97- 110 |
| Synthetisches Hartwachs | (A) | 4 | 114 - 120 |
| Hydrotalzit | (B) | 20 | nichtschmelzend |
| Zinkseife von Fettsäuren | (B) | 14 | 120 - 122 |
| Antioxidans | (B) | 3 | 50 - 55 |
| THEIC* | (B) | 2 | 132 - 138 |
| Calciumacetylacetonat | (B) | 3 | nichtschmelzend |
| Rhodiastab 55 P | (B) | 1 | 58 |
| Fettsäureester | (A) | 8 | 46 - 49 |
| Di-Pentaerytritol | (B) | 5 | hochschmelzend |
| Fettsäureester mehrwertiger Alkohole | (A) | 1 | 65 |
| Acrylat | (C) | 24 | 108 ** |

| | | | |
|---|---|---|---|
| * THEIC:Tris-hydroxy-ethyl-isocyanurat ** Glasübergangstemperatur | | | |

Die Komponenten wurden in den Extruder gegeben und auf 55°C erhitzt. Das zum Teil verflüssigte Gemisch wurde anschließend durch eine Lochplatte gepresst. Die entstandenen einzelnen Stränge wurden heiß in einem Wasserstrom abgeschlagen, wodurch sich Granulatkörnchen gebildet hatten. Nach dem Ausleiten der Granulatkörnchen aus dem Wasser wurde aus Sieb mit Gebläse getrocknet.

Von den erhaltenen Granulatkörnchen wurde der Siebrückstand im Vergleich zu Pressgranulaten und Pulvern im Dryblend gemessen:
Siebrückstand im Dryblend bei 120°C Mischtemperatur

**Tabelle 2**

| Produktform | Rückstand 315 µ [%] | Rückstand 250 µ [%] |
|---|---|---|
| Pressgranulat | 0,61 | 1,35 |
| UWG Granulat | 0,53 | 1,18 |

Tabelle 2 zeigt, dass das erfindungsgemäße UWG-Granulat im Vergleich zu Pressgranulaten, die aufgrund unregelmäßiger Zusammensetzung und Oberflächenbeschaffenheit deutlich mehr Abrieb erfahren, einen deutlich niedrigeren Siebrückstand aufweist.

## Patentansprüche

1. Verfahren zur Herstellung einer granulierten Stabilisatormischung für halogenhaltige Kunststoffe, die Schritte enthaltend
(a) Erhitzen einer Mischung enthaltend
(A) mindestens ein Gleitmittel ausgewählt aus der Gruppe bestehend aus Montanwachsen, aromatischen oder aliphatischen Estern, Fettsäureestern, Amidwachsen, Polyethylenwachsen, Chlorparaffinen, Glycerinestern oder Erdalkaliseifen, modifizierte Polyethylenwachse, synthetische Hartwachse, Fettketonen und Kombinationen von Fettketonen,
(B) mindestens einen stabilisatoraktiven Stoff ausgewählt aus der Gruppe bestehend aus Koordinationspolymeren, Metallinnerkomplexen, schwermetallhaltigen Stabilisatoren, Ca/Zn-Stabilisatoren auf Basis von Hydrotalcit, Zeolithe und Dawsonite, Hydrocalumite, Stearoylbenzoylmethan und sterisch gehinderte Amine (HALS), heterocyclische Aminoalkohole und Antioxidatien, Anorganische und Organische Basen, Epoxide und Glyzidylverbindungen, β-Diketone und β-Ketoester, Polyole und Zuckeralkohole und Phosphorigsäureester,
(C) Hilfs- und Zusatzstoffe ausgewählt aus der Gruppe bestehend aus Acrylaten, UV-Absorber und Lichtschutzmittel, optische Aufheller, Pigmente, Treibmittel, Antistatika und Weichmacher,
wobei mindestens 1 Gew.% aller Stoffe bezogen auf die Gesamtmenge der Mischung einen Schmelzpunkt unter 100°C aufweist, bei 40 bis 100°C in einem Extruder oder Kneter,
(b) Pressen durch eine Lochplatte,
(c) Durchführen eines Heißabschlags unter Wasser,
(d) Abtransportieren der granulierten Stabilisatormischung in einem Wasserstrom
(e) Ausleiten der granulierten Stabilisatormischung aus dem Wasser, und
(f) Trocknen der granulierten Stabilisatormischung.

2. Verfahren gemäß Anspruch 1, **dadurch gekennzeichnet, dass** mindestens 10 Gew.-% aller Stoffe der Mischung einen Schmelzpunkt unter 100°C aufweisen.

3. Verfahren gemäß Anspruch 1 oder 2, **dadurch gekennzeichnet, dass** mindestens 13 Gew.% aller Stoffe der Mischung einen Schmelzpunkt unter 100°C aufweisen.

4. Verfahren gemäß einem der Ansprüche 1 bis 3, **dadurch gekennzeichnet, dass** das Erhitzen im Extruder in Verfahrensschritt (a) auf eine Temperatur in einem Bereich von 55°C bis 65°C erfolgt.

5. Granulierte Stabilisatormischung, erhältlich nach einem Verfahren gemäß einem der Ansprüche 1 bis 4.

6. Verwendung granulierter Stabilisatormischungen gemäß Anspruch 5 in halogenhaltigen Kunststoffen.

7. Verwendung gemäß Anspruch 6, **dadurch gekennzeichnet, dass** der halogenhaltige Kunststoff Polyvinylchlorid ist.

## Claims

1. A process for producing a pelletized stabilizer mixture for halogen-containing plastics, comprising the following steps:
(a) heating, at from 40 to 100°C in an extruder or kneader, a mixture comprising
(A)at least one lubricant selected from the group consisting of montan waxes, aromatic or aliphatic esters, fatty acid esters, amide waxes, polyethylene waxes, chloroparaffins, glycerol esters or alkaline-earth-metal soaps, modified polyethylene waxes, synthetic hard waxes, fatty ketones, and combinations of fatty ketones,
(B)at least one substance having stabilizer activity selected from the group consisting of coordination polymers, metal inner complexes, heavy-metal-containing stabilizers, Ca/Zn stabilizers based on hydrotalcite, zeolites and dawsonites, hydrocalumites, stearoylbenzoylmethane, and sterically hindered amines (HALS), heterocyclic amino alcohols, and antioxidants, inorganic and organic bases, epoxides and glycidyl compounds, β-diketones and β-ketoesters, polyols, and sugar alcohols, and phosphorous esters,
(C)auxiliaries and additives selected from the group consisting of acrylates, UV absorbers, and light stabilizers, optical brighteners, pigments, blowing agents, antistatic agents, and plasticizers,
where at least 1% by weight of all of the substances, based on the total amount of the mixture, has a melting point below 100°C,
(b) forcing the material through a pelletizing die,
(c) carrying out die-face pelletization under water,
(d) transporting the pelletized stabilizer mixture away in a stream of water,
(e) extracting the pelletized stabilizer mixture from the water, and
(f) drying the pelletized stabilizer mixture.

2. The process as claimed in claim 1, **characterized in that** at least 10% by weight of all of the substances of the mixture have a melting point below 100°C.

3. The process as claimed in claim 1 or 2, **characterized in that** at least 13% by weight of all of the substances of the mixture have a melting point below 100°C.

4. The process as claimed in any of claims 1 to 3, **characterized in that** the heating in the extruder in step (a) takes place to a temperature in the range from 55°C to 65°C.

5. A pelletized stabilizer mixture obtainable by a process as claimed in any of claims 1 to 4.

6. The use of pelletized stabilizer mixtures as claimed in claim 5 in halogen-containing plastics.

7. The use as claimed in claim 6, **characterized in that** the halogen-containing plastic is polyvinyl chloride.

## Revendications

1. Procédé de fabrication d'un mélange stabilisant granulé pour plastiques halogénés, comprenant les étapes suivantes :
(a) le chauffage d'un mélange contenant
(A) au moins un agent lubrifiant choisi dans le groupe constitué par les cires de lignite, les esters aromatiques ou aliphatiques, les esters d'acides gras, les cires d'amides, les cires de polyéthylène, les paraffines chlorées, les esters de glycérine ou les savons alcalino-terreux, les cires de polyéthylène modifiées, les cires synthétiques dures, les cétones grasses et les combinaisons de cétones grasses,
(B) au moins une substance à action stabilisante choisie dans le groupe constitué par les polymères de coordination, les complexes internes de métaux, les stabilisants contenant des métaux lourds, les stabilisants Ca/Zn à base d'hydrotalcite, les zéolithes et les dawsonites, les hydrocalumites, le stéaroylbenzoylméthane et les amines à encombrement stérique (HALS), les aminoalcools hétérocycliques et les antioxydants, les bases inorganiques et organiques, les époxydes et les composés glycidyliques, les β-dicétones et les β-cétoesters, les polyols et les sucres-alcools et les esters de l'acide phosphoreux,
(C) des adjuvants et des additifs choisis dans le groupe constitué par les acrylates, les absorbeurs UV et les agents photoprotecteurs, les azurants optiques, les pigments, les agents gonflants, les antistatiques et les plastifiants,
au moins 1 % en poids de toutes les substances par rapport à la quantité totale du mélange présentant un point de fusion inférieur à 100 °C, à 40 à 100 °C dans une extrudeuse ou un malaxeur,
(b) le pressage au travers d'une plaque perforée,
(c) la réalisation d'un fractionnement à chaud sous l'eau,
(d) le transport du mélange stabilisant granulé dans un courant d'eau,
(e) le déchargement du mélange stabilisant granulé de l'eau et
(f) le séchage du mélange stabilisant granulé.

2. Procédé selon la revendication 1, **caractérisé en ce qu'**au moins 10 % en poids de toutes les substances du mélange présentent un point de fusion inférieur à 100 °C.

3. Procédé selon la revendication 1 ou 2, **caractérisé en ce qu'**au moins 13 % en poids de toutes les substances du mélange présentent un point de fusion inférieur à 100 °C.

4. Procédé selon l'une quelconque des revendications 1 à 3, **caractérisé en ce que** le chauffage dans l'extrudeuse à l'étape de procédé (a) a lieu à une température dans une plage allant de 55 °C à 65 °C.

5. Mélange stabilisant granulé, pouvant être obtenu par un procédé selon l'une quelconque des revendications 1 à 4.

6. Utilisation de mélanges stabilisants granulés selon la revendication 5 dans des plastiques halogénés.

7. Utilisation selon la revendication 6, **caractérisée en ce que** le plastique halogéné est le polychlorure de vinyle.
